# EUROPEAN PATENT SPECIFICATION

(11) **EP 2 678 959 B1**
(45) Date of publication and mention of the grant of the patent: **17.02.2021**
(21) Application number: 12748832.8
(22) Date of filing: 20.02.2012
(51) Int. Cl.: H04L 5/00, H04W 24/10, H04W 52/14, H04W 52/22, H04W 52/28, H04W 52/34, H04W 52/36, H04L 5/14, H04W 28/04

(54) **METHOD AND APPARATUS FOR ACTIVATING OR DEACTIVATING SECONDARY CARRIERS IN TIME DIVISION DUPLEX MOBILE COMMUNICATION SYSTEM USING CARRIER AGGREGATION**
VERFAHREN UND VORRICHTUNG ZUR AKTIVIERUNG BZW. DEAKTIVIERUNG SEKUNDÄRER TRÄGER IN ZEITMULTIPLEX-MOBILKOMMUNIKATIONSSYSTEMEN MITTELS TRÄGERAGGREGATION
PROCÉDÉ ET APPAREIL POUR ACTIVER OU DÉSACTIVER DES PORTEUSES SECONDAIRES DANS UN SYSTÈME DE COMMUNICATION MOBILE À DUPLEXAGE PAR RÉPARTITION DANS LE TEMPS, AU MOYEN D'UNE AGRÉGATION DE PORTEUSES

(30) Priority: 21.02.2011 US 201161444844 P; 09.02.2012 KR 20120013283
(43) Date of publication of application: 01.01.2014
(73) Proprietor: Samsung Electronics Co., Ltd., Suwon-si, Gyeonggi-do, 443-742 (KR)
(72) Inventor: JANG, Jae Hyuk, Suwon-si Gyeonggi-do 443-370 (KR); KIM, Soeng Hun, Yongin-si Gyeonggi-do 446-908 (KR)
(74) Representative: Nederlandsch Octrooibureau
(86) International application number: PCT/KR2012/001260
(87) International publication number: WO 2012/115412

(56) References cited:
- KR-A- 20100 051 023
- KR-A- 20100 116 125
- KR-A- 20100 118 067
- ZTE: "Clarification of Timing Requirements for Activation and Deactivation of SCells in TDD mode", 3GPP DRAFT; R4-110871, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Taipei, Taiwan; 20110221, 16 February 2011 (2011-02-16), XP050500940, [retrieved on 2011-02-16]
- "3rd Generation Partnership Project; Technical Specification Group Radio Access Network; Evolved Universal Terrestrial Radio Access (E-UTRA); Medium Access Control (MAC) protocol specification (Release 10)", 3GPP STANDARD; 3GPP TS 36.321, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.0.0, 17 December 2010 (2010-12-17) , pages 1-53, XP050462124, [retrieved on 2010-12-17]
- INTERDIGITAL COMMUNICATIONS: "Report of Email discussion #26 on SCell Activation in LTE CA", 3GPP DRAFT; R2-111384 (REPORT EMAIL#26 SCELL ACTIVATION LTE CA), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Taipei, Taiwan; 20110221 - 20110225, 18 February 2011 (2011-02-18), XP050605673, [retrieved on 2011-02-18]

## Description

### [Technical Field]

This invention relates to Time Division Duplex (TDD) wireless communication systems. More particularly, the present invention relates to activation or deactivation of primary and secondary carriers in a Time Division Duplex Long Term Evolution (TDD LTE) system that simultaneously uses multi-carriers via Carrier Aggregation (CA) technology.

### [Background Art]

With the rapid development of wireless communication technology, communication systems have evolved across generations. One of the examples is a Long Term Evolution (LTE) system, which has been developed as a 4th generation LTE system. LTE systems employ a variety of technologies to meet the rapid increase in traffic demand. One such technology that LTE systems use is Carrier Aggregation (CA). Carrier Aggregation refers to a technology that increases the number of carriers used in communication between User Equipment (UE) and an evolved Node B (eNB). For example, Carrier Aggregation increases the number of carriers used from one carrier as disclosed in the related art to a primary carrier and one or more secondary carriers. Such an increase in the number of carriers used in communication between the UE and the eNB increases the amount of transmission by the number of secondary carriers. In LTE technology, a cell in which a primary carrier is served is referred to as a Primary Cell (PCell) and a cell in which a secondary carrier is served is referred to as a Secondary Cell (SCell).

When using Carrier Aggregation, PCell has an additional complexity to control SCell. That is, a determination as to whether to use SCells at a specific PCell may be made, a determination as to conditions for activating and deactivating the SCells may be made, and the conditions for activating and deactivating the SCells may be monitored. After determining the related factors, PCell can control SCells via the factors. A method for activating SCells is also needed. That is, when PCell receives an instruction for activating or deactivating SCells from eNBs, the real operations are required to be specifically described.

ZTE: "Clarification of Timing Requirements for Activation and Deactivation of SCells in TDD mode", 3GPP DRAFT; R4-110871, vol. RAN WG4, no. Taipei, Taiwan; 20110221, 16 February 2011 (2011 -02-16), discloses a clarification of timing requirements for activation and deactivation of secondary cells in TDD mode. It discloses, when the eNB sends an (de)activation command for a secondary cell in subframe n, the UE must have the secondary cell (de)activated by subframe n+x (x=8) on, and also should start reporting CSI for the newly activated secondary cell from subframe n+x (x=8) on, although the report may not be accurate.

"3rd Generation Partnership Project; Technical Specification Group Radio Access Network; Evolved Universal Terrestrial Radio Access (E-UTRA); Medium Access Control (MAC) protocol specification (Release 10)", no. V10 .0.0, 17 December 2010 (2010-12-17), pages 1 -53, discloses that the UE shall for each TTI and for each configured secondary cell: if the UE receives de(activation) MAC control element activating the secondary cell, from the eNB, activate the secondary cell and should start the sCellDeactivationTimer associated with the secondary cell. It further discloses that if the UE receives and (de)activation MAC control element deactivating the secondary cell, or if the sCellDeactivationTimer associated with the activated secondary cell expires in this TTI, the UE deactivates the secondary cell, stops the sCellDeactivation Timer associated with the secondary cell and flush all HARQ buffers associated with the secondary cell.

INTERDIGITAL COMMUNICATIONS: "Report of Email discussion #26 on SCell Activation in LTE CA", 3GPP DRAFT; R2-111384 (REPORT EMAIL#26 SCELL ACTIVATION LTE CA), vol. RAN WG2, no. Taipei, Taiwan; 20110221 - 20110225, 18 February 2011 (2011 -02-18), discloses various alternatives for secondary cell (de)activation in LTE carrier aggregation. It discloses, as an alternative, using a timer, similar to other timing related events. It also discloses, as another alternative, if the secondary cell is activated in a subframe n, to start or restart the sCellDeactivationTimer associated with the secondary cell in that subframe. It further discloses, monitoring the PDCCH for both uplink and downlink DCIs, for a secondary cell that is activated, from subframe n+8 on.

### [Disclosure of Invention]

### [Technical Problem]

Therefore, a need exists for a system and method for performing a self diagnosis of a device without the inconvenience caused when manually selecting a self diagnosis item from a computer or a user interface.

The above information is presented as background information only to assist with an understanding of the present disclosure. No determination has been made, and no assertion is made, as to whether any of the above might be applicable as prior art with regard to the present invention.

### [Solution to Problem]

The invention is defined by the appended set of claims.

In accordance with an exemplary embodiment of the invention, a method for controlling secondary carriers for User Equipment (UE) in Time Division Duplex (TDD) mobile communication system using Carrier Aggregation (CA) is provided. The method includes receiving, by the UE, a secondary carrier control message for activating or deactivating the secondary carriers from Evolved Node Bs (eNBS), operating a first timer and a second timer if the secondary carrier control message corresponds to a message for activating a particular secondary carrier, and activating the forward direction of the particular secondary carrier in a downlink sub-frame arrived first after the second timer has expired.

In accordance with another exemplary embodiment of the invention, a User Equipment (UE) for controlling secondary carriers in Time Division Duplex (TDD) mobile communication system using Carrier Aggregation (CA) is provided. The User Equipment includes a transceiver for transmitting to or for receiving symbols from an Evolved Node B (eNB), and a controller. The controller receives a secondary carrier control message for activating or for deactivating the secondary carriers from the eNB. The controller operates a first timer and a second timer if the secondary carrier control message corresponds to a message for activating a particular secondary carrier. The controller activates the forward direction of the particular secondary carrier in a downlink sub-frame arrived first after the second timer has expired.

Other aspects, advantages, and salient features of the invention will become apparent to those skilled in the art from the following detailed description, which, taken in conjunction with the annexed drawings, discloses exemplary embodiments of the invention.

### [Advantageous Effects of Invention]

As will be described below, exemplary embodiments of the present invention may include a method for controlling secondary carriers which can perform the entire operation required for the activation and deactivation of SCells in TDD systems, without errors.

### [Brief Description of Drawings]

The above and other aspects, features, and advantages of certain exemplary embodiments of the present invention will be more apparent from the following description taken in conjunction with the accompanying drawings, in which:
FIG. 1 illustrates a view of the configuration of a Long Term Evolution (LTE) system according to an exemplary embodiment of the present invention;
FIG. 2 illustrates a view of a wireless protocol stack of an LTE system according to an exemplary embodiment of the present invention;
FIG. 3 illustrates a view to describe Carrier Aggregation (CA) in User Equipment (UE) according to an exemplary embodiment of the present invention;
FIG. 4 illustrates a frame structure of a Time Division Duplex (TDD) system with switch-point periodicity of 5 ms according to an exemplary embodiment of the present invention;
FIG. 5 illustrates a flow chart that describes a message flow in acontrol method according to an exemplary embodiment of the present invention;
FIG. 6 illustrates a flow chart to describe a method for activating secondary carriers in User Equipment according to an exemplary embodiment of the present invention;
FIG. 7 illustrates a flow chart to describe a method for deactivating secondary carriers in User Equipment according to an exemplary embodiment of the present invention; and
FIG. 8 illustrates a schematic block diagram of User Equipment according to an exemplary embodiment of the present invention.

### [Mode for the Invention]

The following description with reference to the accompanying drawings is provided to assist in a comprehensive understanding of exemplary embodiments of the invention as defined by the claims It includes various specific details to assist in that understanding but these are to be regarded as merely exemplary. Accordingly, those of ordinary skill in the art will recognize that various changes and modifications of the embodiments described herein can be made without departing from the scope of the invention, which is defined by the appended claims. In addition, descriptions of well-known functions and constructions may be omitted for clarity and conciseness.

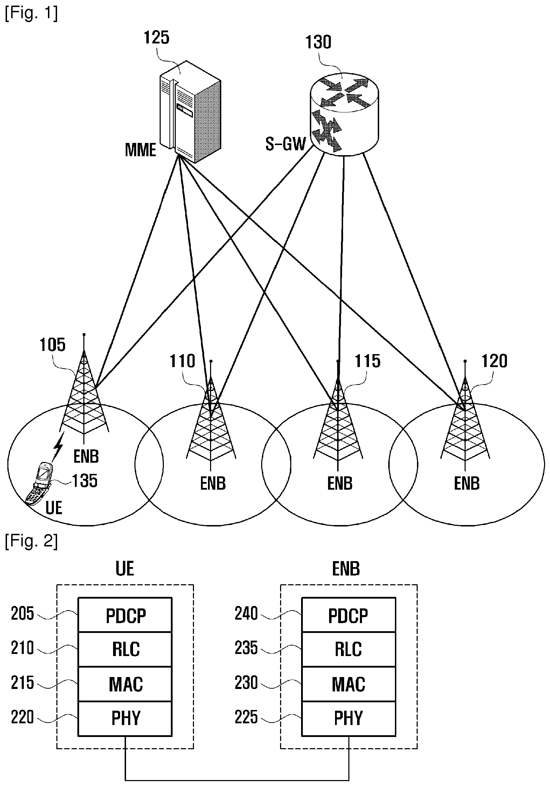

FIG. 1 illustrates a view of the configuration of a Long Term Evolution (LTE) system according to an exemplary embodiment of the present invention.

Referring to FIG. 1, the LTE system configures the wireless access network, including evolved Node Bs (eNBs) 105, 110, 115, and 120, a Mobility Management Entity (MME) 125, and a Serving-Gateway (S-GW) 130. User Equipment (UE) 135 is connected to the eNB 105, 110, 115, or 120 and the S-GW 130 via an external network. According to exemplary embodiments of the present invention, eNBs 105 to 120 correspond to, for example, Node Bs of a Universal Mobile Telecommunication System (UMTS). An eNBs (e.g., an eNB 105, 110, 115, or 120) is connected to UE 135 via wireless channels, and may perform more complex functions relative to an existing Node B or a Node B according to the related art. In an LTE system, because all user traffic, including real-time services such as, for example Voice over Internet Protocol (VoIP) services, is served via shared channels, it is necessary to collect information regarding states (e.g., such as buffer states of UE, available transmission power states, channel states, etc.), and to perform scheduling. For example, each of the eNBs 105 to 120 may perform the scheduling function. One eNB can control a number of cells. For example, in order to implement a transmission rate of 100 Mbps, an LTE system employs Orthogonal Frequency Division Multiplexing (OFDM) at a bandwidth of 20 MHz. The LTE system also employs Adaptive Modulation and Coding (AMC) to determine the modulation scheme and the channel coding rate, according to channel states of a UE.

S-GW 130 is a device that provides data bearers. For example, S-GW 130 can create or remove data bearers according to the control of MME 125. MME 125 performs various control functions, including the mobility management of UE. MME 125 connects to a number of ENBs.

FIG. 2 illustrates a view of a wireless protocol stack of an LTE system according to an exemplary embodiment of the present invention.

Referring to FIG. 2, a UE and an ENB each include a Packet Data Convergence Protocol (PDCP) 205 or 240, a Radio Link Control (RLC) 210 or 235, a Medium Access Control (MAC) 215 or 230, and a Physical (PHY) layer 220 or 225. The PDCP 205 and 240 performs compression decompression of Internet Protocol (IP) headers. The RLC 210 and 235 reconfigure PDCP Packet Data Unit (PDU) to an appropriate size and perform an Automatic Repeat reQuest (ARQ) operation. MAC 215 and 230 connect to a number of RLC layer devices configured in one User Equipment. MAC 215 and 230 multiplex RLC PUDs to MAC PDUs, and de-multiplex RLC PDUs from MAC PDUs. Physical layers (PHY) 220 and 225 in UE and ENB channel-code and modulate data from the upper layers, create OFDM symbols, and transmit the OFDM symbols via a wireless channel. In addition, PHY 220 and 225 demodulate and channel-decode OFDM symbols transmitted via a wireless channel into high layer data, and transfer the data to the upper layers.

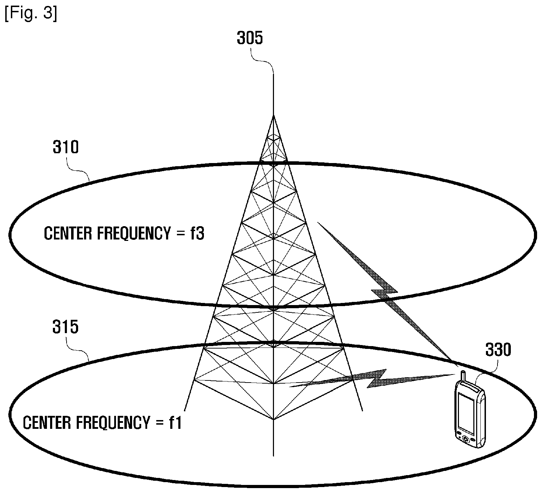

FIG. 3 illustrates a view to describe Carrier Aggregation (CA) in User Equipment (UE) according to an exemplary embodiment of the present invention.

Referring to FIG. 3, an eNB transmits/receives multi-carriers over frequency bands. For example, the eNB may broadcast carriers over frequency bands. As an example, when an eNB 305 broadcasts a carrier 315 with a center frequency fl and a carrier 310 with a center frequency f3, a regular UE (e.g., a UE according to the related art) transmits/receives data via one of the carriers 315 and 310. However, according to exemplary embodiments of the invention, a UE that can perform Carrier Aggregation can simultaneously transmit/receive data using a number of carriers. For example, a UE 330 having a CA capability may use multiple carriers including the carriers 310 and 315 in parallel to send and receive data. According to exemplary embodiments of the present invention, eNB 305 can allocate more carriers to UE 330 that can perform Carrier Aggregation, such that the corresponding data transmission rate of UE 330 is increased.

If it is assumed that a cell is formed by one forward(downlink) carrier and one reverse(uplink) carrier (e.g., one cell is formed of a downlink carrier and one cell is formed of an uplink carrier) that are each transmitted/received from/by one eNB, then Carrier Aggregation may be understood as a UE that simultaneously transmits/receives data via a number of cells. Accordingly, the maximum transmission rate of the UE may increase in proportion to the number of aggregated carriers.

In the following description, when a UE receives data via a forward carrier (e.g., a downlink carrier) or transmits data via a reverse carrier (e.g., an uplink carrier) corresponds to an example in which the UE sends and receives data via a control channel and a data channel provided by a cell corresponding to a frequency band and a center frequency characterizing the carrier. For the sake of convenience, the exemplary embodiments of the present invention will be described based on an LTE system. However, it should be understood that the exemplary embodiments of the present invention are not limited to such an example. For example, exemplary embodiments of the invention can be applied to various wireless communication systems that support Carrier Aggregation.

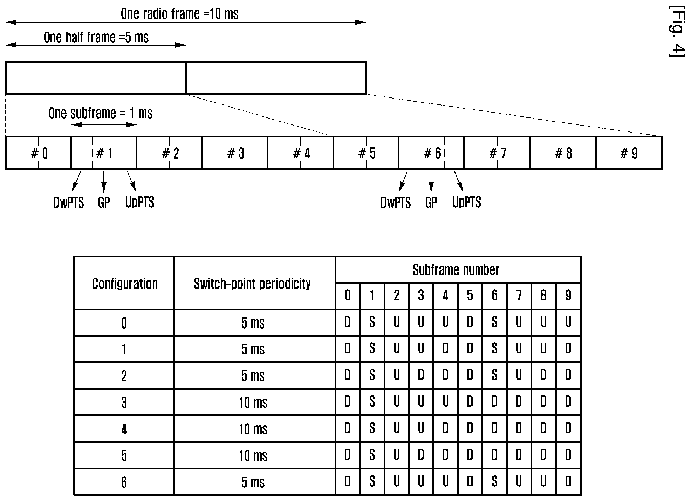

FIG. 4 illustrates a frame structure of a Time Division Duplex (TDD) system with switch-point periodicity of 5 ms according to an exemplary embodiment of the present invention.

As shown in the table, frames corresponding to configurations 0, 1, 2 and 6 have two special sub-frames at sub-frame numbers, #1 and #6, respectively. Likewise, frames corresponding to configurations 3, 4, and 5 have only one special sub-frame at sub-frame number, #1.

One frame is 10 ms long, and is sub-divided into 10 sub-frames (e.g., corresponding to #0, #1, #2, ..., #9). Each sub-frame is 1 ms long. Sub-frames #0, #2, #3, #4, #5, #7, #8, and #9 may be used as downlink sub-frame (e.g., shown by 'D') or uplink sub-frame (e.g., shown by 'U'), according to configurations or TDD configurations. With respect to TDD configuration No. 0, sub-frames #0 and #5 are used as downlink sub-frames, and sub-frames #2, #3, #4, #7, #8, and #9 are used as uplink sub-frame. Likewise, with respect to TDD configuration No. 1, sub-frames #0, #4, #5, and #9 are used as downlink sub-frames, and sub-frames #2, #3, #7, and #8 are used as uplink sub-frames. Referring to FIG. 4, sub-frames #1 and #6 (corresponding to configurations 0, 1, 2, and 6) are special sub-frames between downlink and uplink sub-frames. That is, the special sub-frame refers to a slot that is divided into a Downlink carriers Pilot Time Slot (DwPTS), a Guard Period (GP), and an Uplink Pilot Time Slot (UpPTS). In the DwPTS, downlink data can be transmitted. In the UpPTS, uplink data cannot be transmitted. However, during UpPTS, a Sounding Reference Symbol (SRS) can be transmitted. A GP refers to a pause section between downlink and uplink.

The following description explains exemplary embodiments of the present invention in which a UE receives instructions for activating and deactivating SCells from eNBs. Exemplary embodiments of the present invention include a method that operates, when a UE receives an activation instruction from an eNB, parts of the functions of the UE after a particular time point. Exemplary embodiments of the present invention also propose a method that interrupts, when a UE receives a deactivation instruction from an eNB, parts of the functions of the UE before a particular time point, and other parts of the functions after the particular time point.

For example, a period of time required to perform and terminate an operation may differ from a period of time required to perform and terminate another operation. If the operations are set to be activated or terminated at the same time point, the period of time is set to the operation requiring a longer period of time than the other (e.g., the period of time is set to correspond to the longest of the required periods of time). This causes the increase in the activation and deactivation. For example, immediately upon receiving an instruction from an eNB, a UE cannot use the SCell to transmit/receive data because it takes an additional period of time to activate devices to use the SCell. In addition, although the devices to use the SCell are activated, parts of the functions may require an additional period of time to be normally operated.

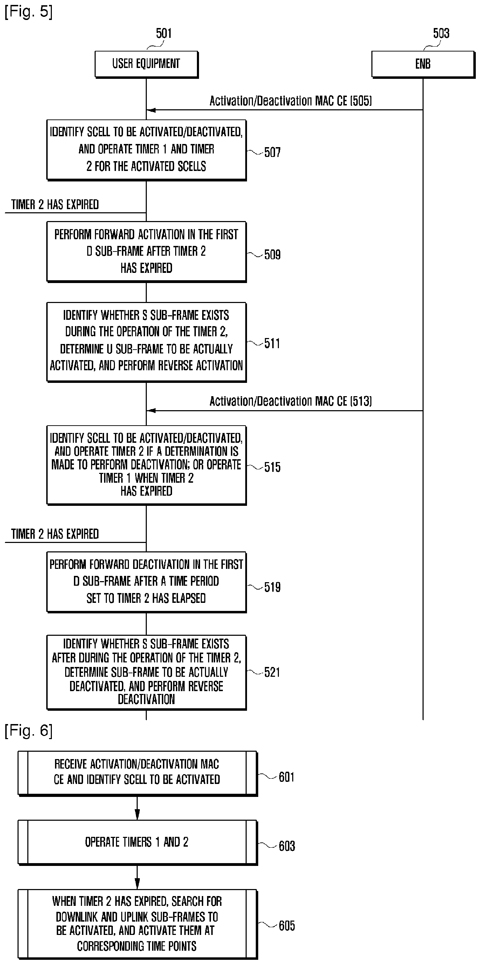

FIG. 5 illustrates a flow chart that describes a message flow in a control method according to an exemplary embodiment of the present invention.

Referring to FIG. 5, according to exemplary embodiments of the present invention, eNB 503 informs UE 501 of SCells to be activated or deactivated, via N-th sub-frame, using an SCell control message (or, for example, a secondary carrier control message) at step 505. In the following description, it is assumed that the SCell control message is an Activation/Deactivation MAC Control Element (CE). As an example, the Activation/Deactivation MAC CE has a fixed size of 8 bits and includes seven C fields and one R field. The R field is a reserved field. The seven C fields are expressed by Ci (e.g., C7, C6, C5, C4, C3, C2, CI). For example, if SCelli is set to '1,' then eNB informs UE of activation for the secondary carriers. As another example, if SCelli is set to '0,' then eNB informs UE of deactivation for the secondary carriers.

The UE 501 identifies SCells to be activated or deactivated according to the received SCell control message, and respectively operates timer 1 (e.g., a first timer) and timer 2 (e.g., a second timer) for activated SCells at step 507.

Timer 1 is operated per SCell. When a forward or reverse transmission resource is allocated to a corresponding SCell, timer 1 is re-operated. If a carrier is not used until timer 1 has expired, then the carrier is deactivated. Timer 1 expires in sub-frame m, where m is a positive integer (e.g., 8). The integer m is set considering a period of time required for the reception and decoding an Activation/Deactivation MAC CE, and the identification of the meanings. For example, it is preferable that m is set to a relatively larger value, considering UE of a low processing speed.

After the UE 501 has received the Activation/Deactivation MAC CE, the UE 501 activates the forward direction of an SCell in sub-frame m or in the first downlink sub-frame after timer 2 has expired (i.e., the downlink sub-frame first arrived after timer 2 has expired) at step 509. For example, the first downlink sub-frame is expressed as 'D' in the Table of FIG. 4. Activating the forward direction of an SCell means performing the operations related to the forward direction of the SCell from a corresponding sub-frame. For example, operations relate to the forward direction of the SCell may include monitoring Physical Downlink Control CHannel (PDCCH), etc.

Simultaneously, after the UE 501 has received the Activation/Deactivation MAC CE and timer 2 has expired in sub-frame m, the UE 501 determines whether a special sub-frame existed during the operation of the timer 2 at step 511. For example, the special sub-frame corresponds to the sub-frame denoted by S in the Table of FIG. 4.

When the UE 501 determines that an S sub-frame existed during the operation of the timer 2, the UE 501 activates the reverse direction of the SCell in the S sub-frame or in a sub-frame without the first PDCCH after timer 2 has expired (i.e., if the PDCCH arrived first after timer 2 has expired) at step 511.

Conversely, when the UE 501 determines that an S sub-frame did not exist during the operation of the timer 2, the UE 501 activates the reverse direction of the SCell in the sub-frame following the first S sub-frame or in the first S sub-frame after timer 2 has expired at step 511. For example, activating the reverse direction of an SCell may correspond to performing the following operations related to the reverse direction of the SCell:
1) Start reporting Channel State Information (CSI), where CSI includes a Channel Quality Indicator (CQI), a Precoding Matrix Index (PMI), a Rank Indicator (RI), a Precoder Type Indication (PTI), etc., that allows eNB to assist corresponding UE in link adaptation and scheduling. A description of CQI, PMI, RI, and PTI is provided below.
   (1) CQI corresponds to a recommended transmission format, meeting a bit error rate of 10%.
   (2) PMI corresponds to a closed-loop spatial multiplexing index.
   (3) RI corresponds to a recommended transmission link.
   (4) PTI corresponds to a precoder type indicator .
2) Start transmitting a Sounding Reference Symbol (SRS), if the SRS has been preset.

According to another exemplary embodiment of the present invention, when the UE 501 determines that an S sub-frame did not exist during the operation of the timer 2, the UE 501 performs a first operation in the first S sub-frame after the timer has expired, and performs a second operation in the sub-frame following the first S sub-frame after the timer has expired. An example of the first operation may be the transmission of a reverse transmission symbol such as the SRS transmission. An example of the second operation may be a normal reverse transmission, such as Physical Uplink Shared CHannel (PUSCH) transmission.

As described above, according to another exemplary embodiment of the present invention, the operations may be separated because, although a reverse transmission is performed in UpPTS of the S sub-frame, all reverse transmission may not be performed. That is, in UpPTS of the S sub-frame, only a few transmissions such as an SRS transmission can be performed but the PUSCH cannot be supported.

eNB 503 informs UE 501 of SCells to be activated or deactivated, using an SCell control message (or, for example, a secondary carrier control message) at step 513. It is assumed that the secondary carrier control message is an Activation/Deactivation MAC Control Element (CE).

For example, the Activation/Deactivation MAC CE has a fixed size of 8 bits. As an example, the Activation/Deactivation MAC CE includes seven C fields and one R field. The R field is a reserved field. The seven C fields are expressed by Ci (e.g., C7, C6, C5, C4, C3, C2, CI). For example, if SCelli is set to '1,' then eNB informs the UE of activation for the secondary carriers. As another example, if SCelli is set to '0,' then eNB informs the UE of deactivation for the secondary carriers. The index i of SCell is used to represent an identifier for a secondary carrier. For example, the index I of SCell has positive integers 1 to 7. When a new secondary carrier is set, the UE reports the identifier to the eNB, together with the information regarding the secondary carrier.

At step 515, UE 501 identifies SCells to be activated or deactivated according to the received Activation/Deactivation MAC CE, and the UE 501 operates timer 2 if a particular SCell is deactivated. Alternatively, if eNB 503 does not allocates the forward or reverse transmission resource for a corresponding SCell to UE 501 for a preset period of time, without performing step 513 (i.e., without informing UE 501 of SCells to be activated or deactivated), then the UE 501 operates timer 2 although timer 1 has expired. Timer 2 expires in sub-frame m, where m is a positive integer (e.g., 8).

At step 519, the UE 501 deactivates the forward direction of an SCell in the first downlink sub-frame after timer 2 has expired (i.e., the downlink sub-frame arrived first after timer 2 has expired). For example, the first downlink sub-frame is expressed as 'D' in the Table of FIG. 4. Deactivating the forward direction of an SCell corresponds to not performing the operations related to the forward direction of the SCell. For example, operations related to the forward direction of the SCell may include monitoring Physical Downlink Control CHannel (PDCCH), etc.

At step 521, after timer 2 has expired, the UE 501 determines whether a special sub-frame existed during the operation of the timer 2. For example, the special sub-frame may correspond to the sub-frame denoted by S in the Table in FIG. 4. As an example, step 521 may be performed simultaneously with step 519. Further at step 521, when the UE 501 determines that S sub-frame existed during the operation of the timer 2, the UE 501 deactivates the reverse direction of the SCell in a sub-frame without the first PDCCH after timer 2 has expired, or the reverse direction of the SCell in the S sub-frame.

Conversely, when the UE 501 determines that S sub-frame didn't exist during the operation of the timer 2, the UE 501 deactivates the reverse direction of the SCell in the sub-frame following the first S sub-frame or the first S sub-frame after timer 2 has expired at step 521. Deactivating the reverse direction of an SCell corresponds to, for example, interrupting the following operations related to the reverse direction of the SCell:
1) Interrupt reporting CSI
2) Interrupt transmitting SRS

As described above, exemplary embodiments of the present invention include a method in which carriers may be activated and/or deactivated.

FIG. 6 illustrates a flow chart to describe a method for activating secondary carriers in User Equipment according to an exemplary embodiment of the present invention.

UE receives Activation/Deactivation MAC CE that identifies SCells to be activated or deactivated at step 601. The Activation/Deactivation MAC ME may include a bitmap of 8 bits. For example, at step 601, the UE determines whether new SCells are to be activated according to the received Activation/Deactivation MAC CE, and the UE identifies such SCells that are to be activated according to the received Activation/Deactivation MAC CE.

When UE determines that the Activation/Deactivation MAC CE includes new SCells to be activated, the UE respectively operates timer 1 and timer 2 for the activated SCells at step 603. For example, the UE identifies SCells that are deactivated before receiving the MAC CE, and the UE determines, when receiving MAC CE, whether 'Activation' is marked on the corresponding bitmap of the MAC CE for the deactivated SCells.

At step 605, after timer 2 has expired, the UE activates the forward and reverse directions of the SCells as described above with reference to FIG. 5.

The UE activates the forward direction of an SCell from the first downlink sub-frame after timer 2 has expired. Activating the forward direction of an SCell means performing the operations related to the forward direction of the SCell from a corresponding sub-frame. For example, operations related to the forward direction of the SCell may include monitoring Physical Downlink Control CHannel (PDCCH), etc. After timer 2 has expired, the UE 501 determines whether a special sub-frame existed during the operation of the timer 2. As an example, a special sub-frame may correspond to a sub-frame denoted by S with reference to FIG. 4. When the UE 501 determines that an S sub-frame existed during the operation of the timer 2, the UE 501 activates the reverse direction of the SCell in a sub-frame without the first PDCCH after timer 2 has expired, or activates the reverse direction of the SCell in the S sub-frame. Conversely, when the UE 501 determines that an S sub-frame did not exist during the operation of the timer 2, the UE 501 activates the reverse direction of the SCell in the sub-frame following the first S sub-frame, or the first S sub-frame after timer 2 has expired. Activating the reverse direction of an SCell may correspond to, for example, performing the following operations related to the reverse direction of the SCell:
1) Start reporting Channel State Information (CSI), where CSI includes a Channel Quality Indicator (CQI), a Precoding Matrix Index (PMI), a Rank Indicator (RI), a Precoder Type Indication (PTI), etc. that allows eNB to assist corresponding UE in link adaptation and scheduling. The CQI, PMI, RI, and PTI are further described below.
   (1) CQI corresponds to a recommended transmission format, meeting a bit error rate of 10%.
   (2) PMI corresponds to a closed-loop spatial multiplexing index.
   (3) RI corresponds to a recommended transmission link.
   (4) PTI corresponds to a precoder type indicator.
2) Start transmitting Sounding Reference Symbol (SRS), if the SRS has been preset.

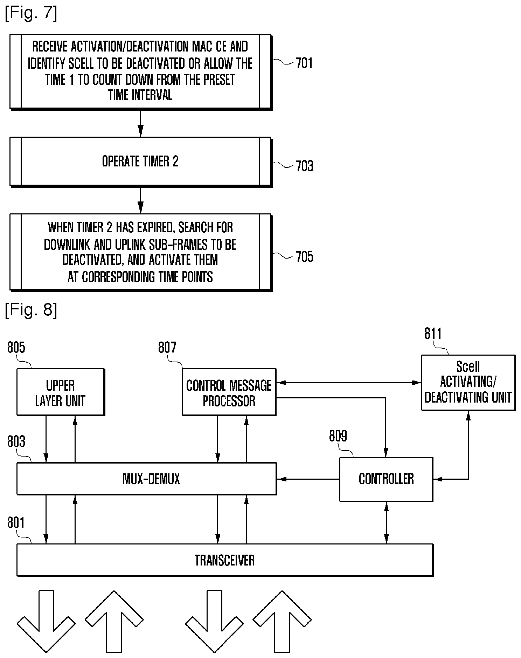

FIG. 7 illustrates a flow chart to describe a method for deactivating secondary carriers in User Equipment according to an exemplary embodiment of the present invention. According to exemplary embodiments of the present invention, a UE identifies SCells to be deactivated according to a received Activation/Deactivation MAC CE or determines whether timer 1, such as, for example, the timer 1 operated at step 603 of FIG. 6, has expired at step 701. For example, the Activation/Deactivation MAC CE may include a bitmap of 8 bits.

When UE determines that timer 1 has expired, the UE operates timer 2 for a corresponding SCell at step 703.

After timer 2 has expired, the UE deactivates the forward and reverse directions of the SCells such as for example, described in the section referring to FIG. 5 at step 705.

For example, after timer 2 has expired, the UE deactivates the forward direction of an SCell from the first downlink sub-frame.

Further at step 705, after timer 2 has expired, the UE determines whether a special sub-frame existed during the operation of the timer 2. For example, the special sub-frame may correspond to the sub-frame denoted by S in the Table in FIG. 4. When the UE determines that an S sub-frame existed during the operation of the timer 2, the UE deactivates the reverse direction of the SCell in a sub-frame without the first PDCCH after timer 2 has expired, or the UE deactivates the reverse direction of the SCell in the S sub-frame. Conversely, when the UE determines that an S sub-frame did not exist during the operation of the timer 2, the UE deactivates the reverse direction of the SCell in the sub-frame following the first S sub-frame, or the first S sub-frame after timer 2 has expired. Deactivating the reverse direction of an SCell corresponds to, for example, interrupting the following operations related to the reverse direction of the SCell:
1) Interrupt reporting CSI
2) Interrupt transmitting SRS

As described above, exemplary embodiments of the present invention can perform preset operations at preset times when activating or deactivating SCells, using Carrier Aggregation, thereby preventing the malfunctions. For example, according to exemplary embodiments of the present invention, a TDD system may perform preset operations at preset times when activating or deactivating SCells, using Carrier Aggregation, thereby preventing malfunctions.

FIG. 8 illustrates a schematic block diagram of User Equipment according to an exemplary embodiment of the present invention.

Referring to FIG. 8, the UE may include a transceiver 801, a multiplexer-demultiplexer (mux/demux) unit 803, an upper layer unit 805, a control message processor 807, a controller 809, and an SCell activating/deactivating unit 811.

According to exemplary embodiments of the present invention, the UE transmits/receives, to/from the other systems, data via the upper layer unit 805, and control messages via the control message processor 807. In an operation corresponding to transmission of data, the controller 809 controls the multiplexer-demultiplexer (mux-demux) 803 so as to multiplex data, and controls the transceiver 801 so as to transmit the multiplexed data. In an operation corresponding to reception of data, the controller 809 controls the transceiver 801 so as to receive physical symbols, and controls the multiplexer-demultiplexer 803 so as to de-multiplex the symbols, and transfers the demultiplexed data to the upper layer unit 805 or the control message processor 807 according to the control message.

According to exemplary embodiments of the present invention, the control message processor 807 receives the Activation/Deactivation MAC CE, and informs the SCell activating/deactivating unit 811 of the reception of the Activation/Deactivation MAC CE. When corresponding SCells are activated, the timers 1 and 2 are operated. After that, the SCell activating/deactivating unit 811 searches for uplink and downlink sub-frames to be activated after timer 2 has expired, and activates them at corresponding times.

If the SCell activating/deactivating unit 811 receives a command for deactivating the activated SCell or the timer 1 for the activated SCell has expired, the SCell activating/deactivating unit 811 operates the timer 2. After that, the SCell activating/deactivating unit 811 searches for uplink and downlink sub-frames to be deactivated after timer 2 has expired, and deactivates the uplink and downlink sub-frames at corresponding times.

Although the exemplary embodiments of the present invention described herein include an UE that is implemented in such a way that the components are distinguished according to the functions, it should be understood that the present invention is not limited to such embodiments. For example, the exemplary embodiments may be modified in such a way that the controller 809 can perform parts of the operations of the control message processor 807 as follows.

When the controller 809 receives, from an eNB, a secondary carrier control message for activating or deactivating secondary carriers, and the secondary carrier control message is a message for activating a particular secondary carrier, the controller 809 operates a timer. The controller 809 may activate the forward direction of the secondary carrier in the downlink sub-frame arrived first after a timer has expired.

After a timer has expired, the controller 809 may determine whether an S sub-frame existed during the operation of the timer. When the controller 809 determines that an S sub-frame existed, the controller 809 activates the reverse direction of the second carrier in the S sub-frame or in a sub-frame without the PDCCH arrived first after the timer has expired.

When the controller 809 determines that an S sub-frame did not exist, the controller activates the reverse direction of the secondary carrier in the S sub-frame arrived first after the timer has expired or in the sub-frame following the first S sub-frame.

Alternatively, when the controller 809 determines that an S sub-frame did not exist, the controller performs a first operation in the S sub-frame arrived first after the timer has expired and performs a second operation in the sub-frame following the S sub-frame arrived first after the timer has expired. Because the first and second operations have been described above, the detailed description of the first and second operations is omitted in the following description.

When the secondary carrier control message is a message for deactivating a particular secondary carrier, the controller 809 operates the timer. The controller 809 deactivates the forward direction of the secondary carrier in the downlink sub-frame arrived first after the timer has expired.

After the timer has expired, the controller 809 identifies whether an S sub-frame existed during the operation of the timer. When the controller 809 determines that an S sub-frame existed, the controller deactivates the reverse direction of the second carrier in the S sub-frame or in a sub-frame without the PDCCH arrived first after the timer has expired.

When the controller 809 determines that an S sub-frame did not exist, the controller deactivates the reverse direction of the secondary carrier in the S sub-frame arrived first after the timer has expired (which is the first S sub-frame) or in the sub-frame following the first S sub-frame.

As described above, exemplary embodiments of the present invention can perform preset operations at preset times when activating or deactivating SCells, using Carrier Aggregation, thereby preventing the malfunctions. For example, according to exemplary embodiments of the present invention, a TDD system may perform preset operations at preset times when activating or deactivating SCells, using Carrier Aggregation, thereby preventing malfunctions.

As described above, exemplary embodiments of the present invention may include a method for controlling secondary carriers which can perform the entire operation required for the activation and deactivation of SCells in TDD systems, without errors.

While the invention has been shown and described with reference to certain exemplary embodiments thereof, it will be understood by those skilled in the art that various changes in form and details may be made therein without departing from the scope of the invention as defined by the appended claims

## Claims

1. A method for controlling a secondary cell by a user equipment, UE, in a time division duplex, TDD, mobile communication system using carrier aggregation, the methode being performed by the UE and comprising:
receiving (505) a control message for activating the secondary cell from a evolved node B, ENB;
operating(507) a first timer and a second timer corresponding to 8 sub-frames in response to receiving of the control message for activating the secondary cell;
activating (509) a forward direction of the secondary cell in the first downlink sub-frame located first after the second timer expires; and
activating (511) a reverse direction of the secondary cell for channel state information, CSI, for the secondary cell and a sounding reference signal, SRS, for the secondary cell in a first sub-frame without a physical downlink control channel, PDCCH, after the second timer expires.

2. The method of claim 1,
wherein, in case that a special sub-frame existed before the second timer expires, the reverse direction of the secondary cell is activated in the special sub-frame after the second timer expires.

3. The method of claim 1,
wherein, in case that a special sub-frame didn't exist before the second timer expires, the reverse direction of the secondary cell is activated in a first special sub-frame after the second timer expires or in a sub-frame following the first special sub-frame.

4. The method of claim 3, further comprising:
performing a first operation in the first special sub-frame; and
performing a second operation in the sub-frame following the first special sub-frame.

5. The method of claim 4, wherein:
the first operation comprises transmitting at least one of the CSI or the SRS in the first special sub-frame; and
the second operation comprises transmission uplink data via a physical uplink shared channel, PUSCH.

6. The method of claim 1, further comprising:
deactivating the secondary cell in case that the secondary cell is not used until the first timer expires.

7. A user equipment, UE, for controlling a secondary cell in time division duplex, TDD, mobile communication system using carrier aggregation, the UE comprising:
a transceiver; and
a controller configured to:
receive, from a evolved node B, ENB via the transceiver, a control message for activating the secondary cell,
operate a first timer and a second timer corresponding to 8 sub-frames in response to receiving of the control message for activating the secondary cell,
activate (509) a forward direction of the secondary cell in the first w downlink sub-frame located first after the second timer expires, and
activate (511) a reverse direction of the secondary cell for channel state information, CSI, for the secondary cell and a sounding reference signal, SRS, for the secondary cell in a first sub-frame without a physical downlink control channel, PDCCH, after the second timer expires.

8. The UE of claim 7,
wherein, in case that a special sub-frame existed before the second timer expires, the reverse direction of the secondary cell is activated in the special sub-frame after the second timer expires.

9. The UE of claim 7,
wherein, in case that a special sub-frame didn't exist before the second timer expires, the reverse direction of the secondary cell is activated in a first special sub-frame after the second timer expires or in a sub-frame following the first special sub-frame.

10. The UE of claim 9, wherein the controller is further configured to:
perform a first operation in the first special sub-frame, and
perform a second operation in the sub-frame following the first special sub-frame.

11. The UE of claim 10, wherein:
the first operation comprises transmitting at least one of the CSI or the SRS in the first special sub-frame; and
the second operation comprises transmission uplink data via a physical uplink shared channel, PUSCH.

12. The UE of claim 7, wherein the controller is further configured to:
deactivate the secondary cell in case that the secondary cell is not used until the first timer expires.

## Patentansprüche

1. Verfahren zum Steuern einer Sekundärzelle durch ein Benutzergerät, UE, in einem Zeitduplex(TDD)-Mobilkommunikationssystem unter Verwenden von Trägeraggregation, wobei das Verfahren von dem UE ausgeführt wird und Folgendes umfasst:
Empfangen (505) einer Steuernachricht zum Aktivieren der Sekundärzelle von einem evolved Node B, ENB;
Betreiben (507) eines ersten Zeitgebers und eines zweiten Zeitgebers, die 8 Teilrahmen entsprechen, als Antwort auf das Empfangen der Steuernachricht zum Aktivieren der Sekundärzelle;
Aktivieren (509) einer Vorwärtsrichtung der Sekundärzelle in dem ersten Downlink-Teilrahmen, der sich zuerst befindet, nach dem Ablaufen des zweiten Zeitgebers; und
Aktivieren (511) einer Rückwärtsrichtung der Sekundärzelle für Kanalzustandsinformationen, CSI, für die Sekundärzelle und eines Sounding-Reference-Signals, SRS, für die Sekundärzelle in einem ersten Teilrahmen ohne physikalischen Downlink-Steuerkanal, PDCCH, nach dem Ablaufen des zweiten Zeitgebers.

2. Verfahren nach Anspruch 1,
wobei, falls ein besonderer Teilrahmen vor dem Ablaufen des zweiten Zeitgebers existierte, die Rückwärtsrichtung der Sekundärzelle in dem besonderen Teilrahmen nach dem Ablaufen des zweiten Zeitgebers aktiviert wird.

3. Verfahren nach Anspruch 1,
wobei, falls ein besonderer Teilrahmen nicht vor dem Ablaufen des zweiten Zeitgebers existierte, die Rückwärtsrichtung der Sekundärzelle in einem ersten besonderen Teilrahmen nach dem Ablaufen des zweiten Zeitgebers oder in einem Teilrahmen, der auf den ersten besonderen Teilrahmen folgt, aktiviert wird.

4. Verfahren nach Anspruch 3, welches ferner Folgendes umfasst:
Ausführen einer ersten Operation in dem ersten besonderen Teilrahmen; und
Ausführen einer zweiten Operation in dem Teilrahmen, der auf den ersten besonderen Teilrahmen folgt.

5. Verfahren nach Anspruch 4, wobei:
die erste Operation das Übertragen der CSI und/oder des SRS in dem ersten besonderen Teilrahmen umfasst; und
die zweite Operation das Übertragen von Uplink-Daten über einen gemeinsam benutzten physikalischen Uplink-Kanal, PUSCH, umfasst.

6. Verfahren nach Anspruch 1, welches ferner Folgendes umfasst:
Deaktivieren der Sekundärzelle, falls die Sekundärzelle nicht verwendet wird, bis der erste Zeitgeber abläuft.

7. Benutzergerät, UE, zum Steuern einer Sekundärzelle in einem Zeitduplex(TDD)-Mobilkommunikationssystem unter Verwenden von Trägeraggregation, wobei das UE Folgendes umfasst:
einen Transceiver; und
eine Steuerung, die konfiguriert ist zum:
Empfangen einer Steuernachricht zum Aktivieren der Sekundärzelle von einem evolved Node B, ENB, über den Transceiver,
Betreiben eines ersten Zeitgebers und eines zweiten Zeitgebers, die 8 Teilrahmen entsprechen, als Antwort auf das Empfangen der Steuernachricht zum Aktivieren der Sekundärzelle,
Aktivieren (509) einer Vorwärtsrichtung der Sekundärzelle in dem ersten Downlink-Teilrahmen, der sich zuerst befindet, nach dem Ablaufen des zweiten Zeitgebers, und
Aktivieren (511) einer Rückwärtsrichtung der Sekundärzelle für Kanalzustandsinformationen, CSI, für die Sekundärzelle und eines Sounding-Reference-Signals, SRS, für die Sekundärzelle in einem ersten Teilrahmen ohne physikalischen Downlink-Steuerkanal, PDCCH, nach dem Ablaufen des zweiten Zeitgebers.

8. UE nach Anspruch 7,
wobei, falls ein besonderer Teilrahmen vor dem Ablaufen des zweiten Zeitgebers existierte, die Rückwärtsrichtung der Sekundärzelle in dem besonderen Teilrahmen nach dem Ablaufen des zweiten Zeitgebers aktiviert wird.

9. UE nach Anspruch 7,
wobei, falls ein besonderer Teilrahmen nicht vor dem Ablaufen des zweiten Zeitgebers existierte, die Rückwärtsrichtung der Sekundärzelle in einem ersten besonderen Teilrahmen nach dem Ablaufen des zweiten Zeitgebers oder in einem Teilrahmen, der auf den ersten besonderen Teilrahmen folgt, aktiviert wird.

10. UE nach Anspruch 9, wobei die Steuerung ferner konfiguriert ist zum:
Ausführen einer ersten Operation in dem ersten besonderen Teilrahmen, und
Ausführen einer zweiten Operation in dem Teilrahmen, der auf den ersten besonderen Teilrahmen folgt.

11. UE nach Anspruch 10, wobei:
die erste Operation das Übertragen der CSI oder des SRS in dem ersten besonderen Teilrahmen umfasst; und
die zweite Operation das Übertragen von Uplink-Daten über einen gemeinsam benutzten physikalischen Uplink-Kanal, PUSCH, umfasst.

12. UE nach Anspruch 7, wobei die Steuerung ferner konfiguriert ist zum:
Deaktivieren der Sekundärzelle, falls die Sekundärzelle nicht verwendet wird, bis der erste Zeitgeber abläuft.

## Revendications

1. Procédé de commande d'une cellule secondaire par un équipement d'utilisateur, UE, dans un système de communication mobile à duplexage par répartition dans le temps, TDD, utilisant une agrégation de porteuses, le procédé étant mis en œuvre par l'UE et comprenant :
recevoir (505) un message de commande pour activer la cellule secondaire à partir d'un nœud B évolué, ENB ;
faire fonctionner (507) un premier temporisateur et un deuxième temporisateur correspondant à 8 sous-trames en réponse à la réception du message de commande pour activer la cellule secondaire ;
activer (509) une direction avant de la cellule secondaire dans la première sous-trame de liaison descendante située en premier après l'expiration du deuxième temporisateur ; et
activer (511) une direction inverse de la cellule secondaire pour des informations d'état de canal, CSI, pour la cellule secondaire et un signal de référence de sondage, SRS, pour la cellule secondaire dans une première sous-trame sans canal de commande de liaison descendante physique, PDCCH, après l'expiration du deuxième temporisateur.

2. Procédé selon la revendication 1,
où, dans le cas où une sous-trame spéciale existerait avant l'expiration du deuxième temporisateur, la direction inverse de la cellule secondaire est activée dans la sous-trame spéciale après l'expiration du deuxième temporisateur.

3. Procédé selon la revendication 1,
où, dans le cas où une sous-trame spéciale n'existerait pas avant l'expiration du deuxième temporisateur, la direction inverse de la cellule secondaire est activée dans une première sous-trame spéciale après l'expiration du deuxième temporisateur ou dans une sous-trame suivant la première sous-trame spéciale.

4. Procédé selon la revendication 3, comprenant en outre :
effectuer une première opération dans la première sous-trame spéciale ; et
effectuer une deuxième opération dans la sous-trame suivant la première sous-trame spéciale.

5. Procédé selon la revendication 4, où :
la première opération comprend la transmission d'au moins l'un parmi les CSI ou le SRS dans la première sous-trame spéciale ; et
la deuxième opération comprend la transmission de données de liaison montante par l'intermédiaire d'un canal partagé de liaison montante physique, PUSCH.

6. Procédé selon la revendication 1, comprenant en outre :
désactiver la cellule secondaire dans le cas où la cellule secondaire ne serait pas utilisée avant l'expiration du premier temporisateur.

7. Équipement d'utilisateur, UE, pour commander une cellule secondaire dans un système de communication mobile à duplexage par répartition dans le temps, TDD, utilisant l'agrégation de porteuses, l'UE comprenant :
un émetteur-récepteur ; et
un contrôleur configuré pour :
recevoir, à partir d'un nœud B évolué, ENB, par l'intermédiaire de l'émetteur-récepteur, un message de commande pour activer la cellule secondaire,
faire fonctionner un premier temporisateur et un deuxième temporisateur correspondant à 8 sous-trames en réponse à la réception du message de commande pour activer la cellule secondaire,
activer (509) une direction avant de la cellule secondaire dans la première sous-trame de liaison descendante située en premier après l'expiration du deuxième temporisateur, et
activer (511) une direction inverse de la cellule secondaire pour des informations d'état de canal, CSI, pour la cellule secondaire et un signal de référence de sondage, SRS, pour la cellule secondaire dans une première sous-trame sans canal de commande de liaison descendante physique, PDCCH, après l'expiration du deuxième temporisateur.

8. UE selon la revendication 7,
où, dans le cas où une sous-trame spéciale existerait avant l'expiration du deuxième temporisateur, la direction inverse de la cellule secondaire est activée dans la sous-trame spéciale après l'expiration du deuxième temporisateur.

9. UE selon la revendication 7,
où, dans le cas où une sous-trame spéciale n'existerait pas avant l'expiration du deuxième temporisateur, la direction inverse de la cellule secondaire est activée dans une première sous-trame spéciale après l'expiration du deuxième temporisateur ou dans une sous-trame suivant la première sous-trame spéciale.

10. UE selon la revendication 9, où le contrôleur est configuré en outre pour :
effectuer une première opération dans la première sous-trame spéciale, et
effectuer une deuxième opération dans la sous-trame suivant la première sous-trame spéciale.

11. UE selon la revendication 10, où :
la première opération comprend la transmission d'au moins l'un parmi les CSI ou le SRS dans la première sous-trame spéciale, et
la deuxième opération comprend la transmission de données de liaison montante par l'intermédiaire d'un canal partagé de liaison montante physique, PUSCH.

12. UE selon la revendication 7, où le contrôleur est configuré en outre pour :
désactiver la cellule secondaire dans le cas où la cellule secondaire ne serait pas utilisée avant l'expiration du premier temporisateur.
